# DEMANDE DE BREVET EUROPEEN

(11) **EP 2 199 831 A2**
(43) Date de publication de la demande: **23.06.2010**
(21) Numéro de dépôt: 09306279.2
(22) Date de dépôt: 18.12.2009
(51) Int. Cl.: G01V 5/00

(54) **Dispositif et procédé de détection par imagerie X a très faible dose d'objets portes par un sujet en mouvement**

(30) Priorité: 19.12.2008 FR 0858817
(71) Demandeur: Gesec R&D, 77810 Thomery (FR)
(72) Inventeur: Friederich, Alain, F-75007 PARIS (FR); Bourgoin, Jacques, F-77810 THOMERY (FR); Sun, GuoCai, F-92340 BOURG LA REINE (FR)
(74) Mandataire: Michelet, Alain

(57) **Abrégé**

L'invention concerne un dispositif et un procédé de détection par imagerie X d'objets sur un sujet en mouvement par rapport audit dispositif de détection selon une direction d'avancement (Y). Le dispositif de détection comprend, en outre, une source de rayons X (1), un détecteur de rayons X (2) fixe comprenant au moins une colonne formée de m pixels aptes à détecter les radiations issues de l'interaction du flux de rayons X avec le sujet.

Selon l'invention, le dispositif comprend des moyens de conformation du faisceau (6) aptes à produire un faisceau de rayons X rideau (7) ayant une largeur L proche de celle d'une colonne de pixels du détecteur de rayons X (2), et dirigé sur la colonne de pixels, deux supports latéraux (5a, 5b) rigides aptes à supporter le détecteur de rayons X (2), et les moyens de conformation du faisceau (6), le détecteur de rayons X (2) étant un détecteur rapide et sensible ayant un temps de réponse inférieur à 10 µs, le détecteur de rayons X (2) étant apte à réaliser une série de n échantillonnages, ayant chacun une durée te, lors du passage du sujet devant la colonne de pixels dudit détecteur de rayons X (2) pendant la durée Tp, générant n images colonnes, la durée d'échantillonnage te étant inférieure ou égale à la durée de parcours tp d'un point dudit sujet devant une colonne de pixels. Le regroupement des n images colonne permet d'obtenir l'image du sujet. Dans cette configuration système on peut réaliser des images en utilisant des doses inférieures à 10⁻³ mSv.

## Description

L'invention concerne un dispositif et un procédé de détection par imagerie X d'objets portés par un sujet en mouvement.

L'invention est plus particulièrement appliquée à la sécurité et au contrôle d'individus dans les zones d'accès réglementé (aéroport par exemple). Plus particulièrement, l'invention est appliquée à la détection d'objets portés par un individu.

Ces objets peuvent être des produits dangereux (explosifs), des produits toxiques (drogues) et/ou des armes, par exemple.

Il existe des portiques de sécurité pour humains destinés à détecter des objets métalliques qui fonctionnent globalement par changement de perméabilité d'une boucle qui ne permettent pas une localisation spatiale. On connaît également des portiques basés sur l'utilisation des signaux hyperfréquences qui ne donnent qu'une image de la surface.

Ces systèmes ont une utilisation très spécifique (détection de métal par exemple) et ne permettent pas de réaliser des images ayant une résolution satisfaisante.

Dans le système décrit ci-dessous on utilise un flux de rayons X caractérisé par son énergie et sa dose :

La dose se définit de la manière suivante : D = F x Te, F étant le flux de photons X et Te le temps d'exposition. L'irradiation de cellules humaines par un flux de rayons X est susceptible d'introduire des dommages irréversibles.

La dose admissible légale par an pour un individu est de 1 mSv (milliSievert) (environ dix fois l'équivalent de la dose d'une radiographie pulmonaire qui est de 0,1 mSv).

Ainsi, la dose admissible pour chaque passage journalier d'un individu dans un dispositif RX doit être inférieure à 10⁻³ mSv.

Par ailleurs, il existe des systèmes de détection par rayons X, comme celui du document US 2006/0145080, qui permettent de contrôler le contenu de véhicules transportant des marchandises.

D'autres systèmes de détection par rayons X sont destinés au contrôle des bagages dans les aéroports.

Ces systèmes de détection par rayons X nécessitent des doses de rayons X élevées et ne sont pas applicables au contrôle d'individu.

Dans ces systèmes, diminuer le flux de rayons X pour être compatible avec l'objectif de dose de 10⁻³ mSv conduirait à une dégradation de la qualité de l'image, qui la rendrait inexploitable.

Par ailleurs, avec les systèmes d'imagerie X de l'art antérieur, le temps de pause nécessaire est incompatible avec l'observation d'un individu en mouvement.

L'invention a donc pour objet de fournir un dispositif et un procédé de détection par imagerie X d'objets sur un sujet en mouvement permettant d'obtenir des images d'objets transportés par un sujet en mouvement avec une bonne résolution, tout en irradiant le sujet avec une dose de rayons X faible et acceptable du point de vue légal.

A cet effet, l'invention concerne un dispositif de détection par imagerie X d'objets sur un sujet en mouvement par rapport audit dispositif de détection selon une direction d'avancement (Y), ledit dispositif comprenant :
- une source de rayons X fixe et apte à émettre un flux de rayons X afin d'irradier ledit sujet, lesdits photons générés ayant une énergie comprise entre 10 keV et 120 keV,
- un détecteur de rayons X fixe comprenant au moins une colonne formée de m pixels apte à produire simultanément m signaux électriques pour former une image colonne, m étant supérieur ou égal à 1, ledit détecteur de rayons X étant apte à détecter les radiations non absorbées par le sujet, ledit sujet parcourant une colonne de pixels pendant une durée de parcours Tp, et un point dudit sujet parcourant ladite colonne de pixels pendant une durée tp,
- des moyens de commande et de synchronisation de ladite source de rayons X et dudit détecteur de rayons X, et
- des moyens de traitement numérique et de visualisation desdits signaux électriques aptes à reproduire une image du sujet.

Selon l'invention :
- des moyens de conformation du faisceau sont disposés devant ladite source de rayons X, lesdits moyens de conformation du faisceau étant aptes à conformer le rayonnement X émis par la source de rayons X pour produire un faisceau de rayons X rideau ayant une largeur L proche de celle d'une colonne de pixels du détecteur de rayons X, et dirigé sur ladite colonne de pixels,
- ledit détecteur de rayons X est un détecteur sensible et rapide ayant un temps de réponse inférieur à 10 µs, ledit détecteur de rayons X et les moyens de commande et de synchronisation étant aptes à réaliser une série de n échantillonnages, ayant chacun une durée te, lors du passage du sujet devant la colonne de pixels dudit détecteur de rayons X pendant la durée Tp, générant n images colonnes, la durée d'échantillonnage te étant inférieure ou égale à la durée de parcours tp d'un point dudit sujet devant une colonne de pixels.

Ainsi, l'invention fournit un dispositif de détection par imagerie X sur un sujet en mouvement destiné à la sécurité permettant de réaliser des images de très bonne qualité et en un temps très court. La dose d'irradiation reçue par le sujet est très faible. On obtient des images sur lesquelles les objets à détecter présentent un fort contraste sur les tissus humains. La dose reçue par un sujet lors de chaque passage dans le dispositif de détection par imagerie X est inférieure à 10⁻³ mSv.

Le temps de passage Tp d'un sujet à travers un portique de sécurité étant de l'ordre d'une fraction de seconde, le dispositif de détection par imagerie X est capable de réaliser une image exploitable pendant le temps de passage du sujet marchant à une vitesse normale.

L'utilisation d'un détecteur rapide et sensible, permet de ramener la durée d'exposition Te du sujet à un temps plus court et donc d'abaisser la dose d'irradiation. Cette faible dose permet un usage courant du dispositif de détection, tout en utilisant un niveau de flux de rayons X permettant de maintenir des performances de qualité d'image élevée (contraste, résolution), nécessaires à l'identification des objets ou produits à détecter sur le sujet.

L'invention permet également de détecter toute sorte de matières (métaux, plastiques,...).

Un tel dispositif de détection peut donc être utilisé dans un portique de détection dans les aéroports. D'autres applications sont également possibles comme l'inspection des camions pour détecter d'éventuels passagers clandestins ou marchandises illicites. Le conducteur peut rester dans le camion pour le déplacer durant le contrôle, sans risquer d'être irradié avec une dose trop élevée.

Pour le contrôle de bagages en continu, l'invention permet d'éviter l'endommagement des dispositifs électroniques ou l'endommagement des supports photosensibles, par exemple. L'invention permet également un contrôle plus rapide des bagages.

Dans différents modes de réalisation possibles, la présente invention concerne également les caractéristiques suivantes qui pourront être considérées isolément ou selon toutes leurs combinaisons techniquement possibles et apportent chacune des avantages spécifiques :
- le dispositif de détection comprend des moyens de déclenchement et d'arrêt automatiques de la source de rayons X et du détecteur de rayons X, lesdits moyens de déclenchement et d'arrêt automatiques étant des moyens de déclenchement et d'arrêt optiques aptes à permettre le déclenchement et l'arrêt de la source de rayons X et du détecteur de rayons X lors du passage du sujet entre les supports latéraux,
- ladite source de rayons X est une source à flux continu apte à délivrer un flux de rayons X continu pendant une durée Ti, la durée Ti étant supérieure ou égale à la durée de parcours dudit sujet devant une colonne de pixels,
- ladite source de rayons X est une source impulsionnelle apte à produire une série d'impulsions de rayons X de durée ti lors du passage du sujet devant le détecteur de rayons X, la durée de chaque impulsion de rayons X ti étant supérieure ou égale à la durée d'échantillonnage te.

Cette configuration permet de diminuer la dose de rayons X globale reçue par le sujet en stoppant l'irradiation entre deux intervalles de mesure.

Les moyens de déclenchement et d'arrêt automatiques permettent de limiter la durée totale d'irradiation du sujet dans le cas où le sujet s'arrête entre la source et de détecteur de rayons X. Le temps d'irradiation total peut être temporisé pendant un temps prédéfini.

De façon alternative, un détecteur de mouvement peut couper la source de rayons X lorsque le sujet est arrêté.
- le détecteur de rayons X comprend une colonne de pixels dédiée à la détection des rayons X non absorbés par le sujet, et au moins une autre colonne de pixels dédiée à la détection des rayons X diffusés par le sujet.

Pour chaque échantillonnage, la mesure du flux direct est corrigée du fond diffusé.

L'invention concerne également un procédé de détection par imagerie X d'objets sur un sujet en mouvement, selon une direction d'avancement (Y), ledit procédé de détection comprenant les étapes consistant à :
- émettre au moins un flux de rayons X afin d'irradier ledit sujet, lesdits photons générés ayant une énergie comprise entre 10 keV et 120 keV,
- détecter les radiations issues de l'interaction du flux de rayons X avec le sujet au moyen d'un détecteur de rayons X comprenant au moins une colonne formée de m pixels produisant simultanément m signaux électriques associés à une image colonne, m étant supérieur ou égal à 1,
- traiter numériquement lesdits signaux électriques et visualiser l'image reproduite du sujet. L'image globale du sujet étant obtenue par juxtaposition des images « colonne ».

Selon l'invention :
- le rayonnement X émis est conformé en un faisceau de rayons X rideau ayant une largeur L proche de celle d'une colonne de pixels du détecteur de rayons X, et dirigé sur ladite colonne de pixels,
- le temps de réponse du détecteur de rayons X est inférieur à 10 µs,
- un point dudit sujet parcourant une colonne de pixels du détecteur de rayons X pendant une durée tp, ledit détecteur de rayons X réalise une série de n échantillonnages, ayant chacun une durée te, lors du passage du sujet devant la colonne de pixels dudit détecteur de rayons X pendant la durée Tp, générant n images colonnes, la durée d'échantillonnage te étant inférieure ou égale à la durée de parcours tp d'un point dudit sujet devant une colonne de pixels.

Dans différents modes de réalisation possibles, la présente invention concerne également les caractéristiques suivantes qui pourront être considérées isolément ou selon toutes leurs combinaisons techniquement possibles et apportent chacune des avantages spécifiques :
- l'émission du flux de rayons X et la série d'échantillonnages sont déclenchées automatiquement et synchronisées,
- le flux de rayons X se présente sous la forme d'une impulsion de rayons X de durée ti, n impulsions de durée ti étant émises lors du passage du sujet devant le détecteur de rayons X, chaque impulsion étant synchronisée avec un échantillonnage pour obtenir l'image d'une tranche du sujet, les n images obtenues étant recombinées pour reformer l'image du sujet, chaque échantillonnage ayant une durée te inférieure ou égale à la durée de l'impulsion de rayons X ti,
- n* échantillonnages supplémentaires sont réalisés pendant chaque durée de parcours tp d'un point dudit sujet devant une colonne de pixels, générant n x n* images colonnes pendant la durée de parcours Tp dudit sujet devant la colonne de pixels, la durée d'échantillonnage te étant strictement inférieure à la durée de parcours tp, et n* étant supérieur à 1. Cette configuration permet d'augmenter la résolution de l'image.
- lors de chaque échantillonnage, un signal associé à un flux de rayons X non absorbé par de sujet est mesuré et un signal associé à un flux de rayons X diffusé par de sujet est mesuré, lesdits signaux étant mesurés simultanément et soustraits.

La résolution de l'image peut être augmentée en diminuant le temps d'acquisition des pixels pendant le temps de parcours d'un point du sujet devant la colonne de pixels.

La résolution peut être également augmentée physiquement en diminuant la taille du pixel.

L'invention sera décrite plus en détail en référence aux dessins annexés dans lesquels :
- la figure 1 représente schématiquement la coupe verticale d'un dispositif de détection par imagerie X, selon un premier mode de réalisation de l'invention ;
- la figure 2 représente schématiquement la coupe horizontale de ce dispositif de détection ;
- la figure 3 représente la durée ti d'un flux de rayons X continu et la durée te des échantillonnages successifs, selon ce premier mode de réalisation ;
- la figure 4 représente la durée ti de plusieurs impulsions de rayons X et la durée te des échantillonnages successifs, selon ce mode de réalisation ;
- la figure 5 représente un mode de réalisation de l'invention dans lequel le détecteur accumule plusieurs échantillonnages pendant la durée de parcours tp ;

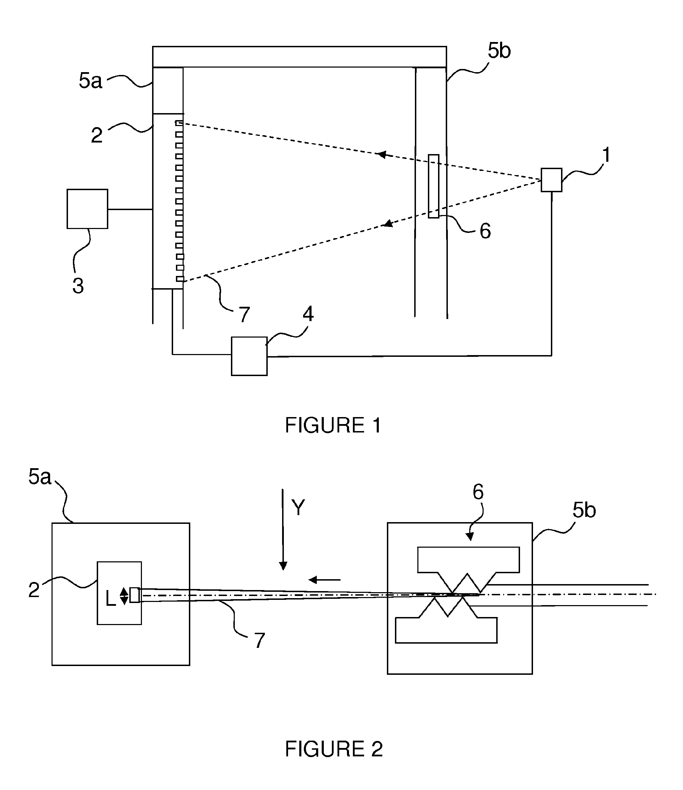

La figure 1 représente un dispositif de détection par imagerie X selon un premier mode de réalisation de l'invention.

Ce dispositif de détection par imagerie X est destiné à détecter des objets portés par un sujet en mouvement par rapport au dispositif de détection selon une direction d'avancement (Y) du sujet.

Par sujet, on entend un humain ou un animal. Le sujet peut être entièrement ou partiellement inspecté.

Ce dispositif de détection comprend deux supports latéraux 5a, 5b rigides et aptes à être traversés par le sujet. Ces deux supports latéraux 5a, 5b peuvent être reliés par une autre partie à leur extrémité supérieure pour former un portique.

Ce dispositif de détection peut également ne comporter que les deux supports latéraux 5a, 5b.

Ces deux supports latéraux 5a, 5b sont disposés l'un en face de l'autre et sont préférentiellement parallèles.

Le dispositif de détection par imagerie X comprend une source de rayons X 1 fixe et apte à irradier le sujet avec un flux de rayons X.

De manière préférée, la source de rayons X 1 éclaire le profil du sujet sur toute la hauteur de ce dernier. Il est également possible d'irradier une zone plus petite du sujet, comme par exemple une tranche de l'abdomen. Il est également possible d'avoir un sujet traversant latéralement les deux supports latéraux 5a, 5b afin d'obtenir une image du sujet vue de face.

Cette source de rayons X 1 génère des photons ayant une énergie comprise entre 10 keV et 120 keV. Cette énergie est préférentiellement d'environ 40 keV. On entend par source de rayons X 1, une source de rayons X unique ou multiple.

Le dispositif de détection par imagerie X comprend un détecteur de rayons X 2 comportant au moins une colonne formée de plusieurs pixels aptes à détecter les radiations issues de l'interaction du flux de rayons X avec le sujet. Cette colonne de pixels génère simultanément m signaux électriques, chaque signal électrique étant associé à un pixel et m étant supérieur ou égal à 1. Ces m signaux électriques forment une image colonne.

On définit par tp la durée de parcours ou de passage d'un point du sujet devant une colonne de pixels, suivant la direction (Y). La colonne de pixels et les pixels sont traversés par le sujet sur leur largeur. La vitesse de déplacement d'un individu marchant normalement est d'environ 5 km/h, ce qui correspond à un temps de passage d'un point du sujet devant une colonne de pixels de 1 mm de large, par exemple, de 0,7 ms. Autrement dit, un point du sujet parcourt une distance de 1 mm en 0,7 ms.

La durée Tp correspond à la durée de parcours du sujet entier devant une colonne de pixels (Tp > tp). Autrement dit, entre le passage du premier point et du dernier point du sujet devant la colonne de pixels du détecteur 2, il s'écoule la durée Tp.

Des moyens de conformation du faisceau 6 sont disposés devant la source de rayons X 1. Ces moyens de conformation du faisceau 6, illustrés sur la figure 2, permettent de conformer le rayonnement X émis par la source de rayons X 1 pour produire un faisceau de rayons X rideau 7 ayant une épaisseur L proche de celle d'une colonne de pixels du détecteur de rayons X 2.

Des exemples de moyens de conformation du faisceau 6 sont décrits dans le document FR 2 622 026. Ces moyens de conformation du faisceau 6 permettent de conformer un rayonnement X selon une section de dimensions précises. Le faisceau de rayons X rideau 7 obtenu est fin et est orientable dans l'espace. Ces moyens de conformation du faisceau 6 comprennent deux pièces de conformation en forme de mâchoire disposées l'une en face de l'autre.

La figure 2 représente un exemple de moyens de conformation du faisceau 6, en vue de dessus.

Une première pièce de conformation possède au moins deux arêtes de conformation parallèles définissant un premier rideau de conformation parallèle à la direction du faisceau RX à conformer.

Une deuxième pièce de conformation possède au moins une arête parallèle aux deux arêtes du premier dispositif de conformation, pouvant s'imbriquer entre ces deux arêtes et distante du rideau défini par ces deux arêtes d'une distance déterminant l'espace de conformation du faisceau. Les deux dispositifs de conformation sont mobiles l'un par rapport à l'autre perpendiculairement à la direction du faisceau de rayons X à conformer.

Les moyens de conformation du faisceau 6, la source de rayons X 1 et le détecteur de rayons X sont positionnés de façon à ce que le faisceau de rayons X rideau 7 soit dirigé sur la colonne de pixels. Préférentiellement, tous les pixels de la colonne sont éclairés.

Avantageusement, l'épaisseur L du faisceau de rayons X rideau 7 (ou nappe de rayons X) correspond sensiblement à la largeur de chaque pixel de la colonne de pixels. Elle peut être de 1 mm, par exemple.

Ces moyens de conformation du faisceau 6 à mâchoires permettent d'éviter toute réflexion parasite et limitent les problèmes de diffusion (risque d'élargissement du faisceau de rayons X rideau 7).

D'autres moyens de conformation du faisceau 6 sont utilisables comme ceux à étranglement entre cylindres.

Une ou plusieurs sources de rayons X peuvent être utilisées pour éclairer les moyens de conformation du faisceau 6. De petites sources (à faible flux de rayons X) peuvent également être distribuées le long d'un des supports latéraux 5a, 5b.

Le faisceau de rayons X rideau 7 irradie (ou éclaire) une tranche du sujet (1 mm par exemple). Chaque point du sujet traverse le faisceau de rayons X rideau 7. Après interaction avec le sujet et les objets qu'il est susceptible de porter, un faisceau de rayons X rideau, non absorbé par le sujet, vient éclairer la colonne de pixels.

Un des supports latéraux 5b supporte les moyens de conformation 6 du faisceau de rayons X 1 et l'autre support latéral 5a supporte le détecteur de rayons X 2.

La distance entre les moyens de conformation du faisceau 6 et le détecteur de rayons X 2 est préférentiellement d'environ 1 m.

Le détecteur de rayons X 2 est un détecteur sensible (plusieurs milliers d'électrons par photon X absorbé) et rapide ayant un temps de réponse inférieur à 10 µs. Le détecteur de rayons X 2 est apte à réaliser une série de n échantillonnages, ayant chacun une durée te, lors du passage de durée Tp du sujet devant le détecteur de rayons X 2, générant un ensemble de n images colonnes, soit n x m signaux électriques par colonne de pixels. Chaque échantillonnage est associé à une tranche du sujet. A chaque échantillonnage d'une tranche du sujet correspond m signaux électriques, n et m étant supérieurs ou égaux à 1.

Chaque échantillonnage a une durée te inférieure ou égale à la durée de parcours tp.

La durée d'acquisition complète du détecteur de rayons X 2 est Ta, avec Ta > te.

La durée de parcours Tp du sujet devant une colonne de pixels du détecteur de rayons X 2 correspond à un temps de passage moyen et probable car le sujet est susceptible de s'arrêter, par exemple, devant le détecteur de rayons X 2. Afin d'éviter une irradiation excessive du sujet pouvant survenir dans cette circonstance, l'irradiation est arrêtée automatiquement au-delà du temps Tp.

Le détecteur de rayons X 2 est un détecteur semi-conducteur à conversion directe des photons en électrons, tel que décrit dans les documents de l'art antérieur FR 2 820 243 et FR 2 832 220.

Le document FR 2 832 220 divulgue que ce détecteur de rayons X 2 est un détecteur solide à base d'un matériau semi-conducteur permettant de convertir directement les photons en électrons. Dans un mode de réalisation possible, il comporte une couche épitaxiale d'un matériau semiconducteur ayant une épaisseur suffisante pour absorber efficacement les photons X. Dans un mode de réalisation préféré, l'épaisseur de cette couche dépend de l'énergie des photons X à absorber et elle est comprise entre 100 µm et 1 mm.

Avantageusement, le détecteur de rayons X 2 est constitué d'un matériau semiconducteur ayant un numéro atomique élevé et une bande interdite comprise entre 1,4 et 1,6 eV. Les électrons libres dans le matériau ont une mobilité supérieure à 1000 cm²v⁻¹s⁻¹ et une durée de vie de l'ordre de 10 ns à 100 ns. Le matériau semiconducteur est alors choisi parmi l'un des matériaux suivants : GaAs, InP ou CdTe. Avec ces conditions il est possible d'avoir un détecteur élémentaire d'épaisseur typique de 100 microns avec un temps de réponse de l'ordre de la microseconde.

Le dispositif de détection par imagerie X comprend des moyens de traitement numérique et de visualisation 3 des signaux électriques permettant de reproduire une image du sujet. Les moyens de traitement numérique et de visualisation 3 comprennent des amplificateurs bas bruits associés chacun à un pixel. Ces amplificateurs sont suivis d'un convertisseur analogique-digital, puis d'une unité de stockage permettant ensuite la reconstruction de l'image.

Il comprend également des moyens de commande et de synchronisation 4 de la source de rayons X 1 et du détecteur de rayons X 2. Les moyens de commande et de synchronisation 4 permettent de commander soit le déclenchement du détecteur de rayons X 2 pour acquérir une séquence de n échantillonnages, soit le déclenchement de la source de rayons X 1 pour obtenir un flux de rayons X continu ou des impulsions de rayons X, ou le déclenchement de la source de rayons X 1 et du détecteur de rayons X 2 à la fois, de façon à obtenir une série de n impulsions de rayons X synchronisée avec une série de n acquisitions.

Le dispositif de détection par imagerie X comprend des moyens de déclenchement et d'arrêt automatiques de la source de rayons X 1 et du détecteur de rayons X 2. Les moyens de déclenchement et d'arrêt automatiques sont des moyens de déclenchement optique (laser ou photodiodes, par exemple) aptes à permettre le déclenchement de la source de rayons X 1 et du détecteur de rayons X 2 lors du passage du sujet entre les supports latéraux 5a, 5b.

Ils peuvent également arrêter l'acquisition du détecteur de rayons X et le flux de rayons X. Par exemple, ces moyens de déclenchement peuvent arrêter la source de rayons X 1, lorsque le sujet s'arrête devant le détecteur de rayons X 2, lui évitant de recevoir une dose trop élevée de radiations.

Selon un mode de réalisation possible de l'invention représenté sur la figure 1, le détecteur de rayons X 2 comprend une seule colonne de pixels. Il se présente sous forme de barrette.

Dans l'exemple qui suit, la colonne de pixels présente une largeur de 1 mm et une hauteur de taille humaine (2 m par exemple). La largeur de la colonne de pixels correspond à celle des pixels. Elle est choisie en fonction de la résolution souhaitée. Elle peut être différente de 1 mm.

Dans un mode de réalisation possible, la source de rayons X 1 est une source à flux continu apte à délivrer un flux de rayons X continu pendant une durée Ti supérieure ou égale à la durée de parcours Tp du sujet devant une colonne de pixels.

Les moyens de commande et de synchronisation 4 commandent le déclenchement de la source de rayons X 1 pour obtenir un flux de rayons X continu et le déclenchement du détecteur de rayons X 2 pour l'acquisition d'une séquence de n échantillonnages pendant la génération du flux de rayons X continu.

Lorsque le sujet traverse le faisceau de rayons X rideau 7, il n'est irradié à un instant donné que sur la largeur du faisceau de rayons X rideau 7. Chaque section du sujet est irradiée de la même façon et reçoit la même dose d'irradiation.

Le détecteur de rayons X 2 réalise une série d'échantillonnages tranche par tranche, au fur et à mesure que le sujet passe devant la colonne de pixels.

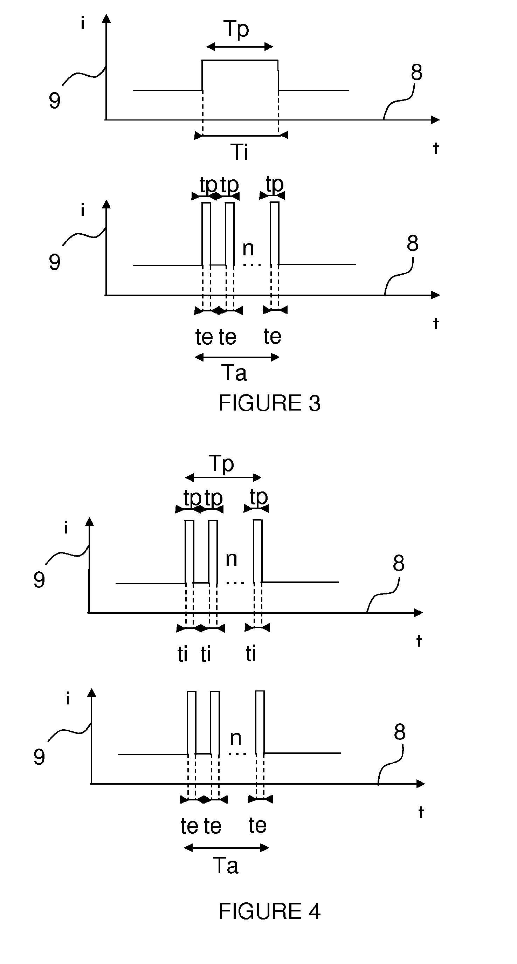

La figure 3 permet de comparer la durée du flux de rayons X continu Ti produit par la source de rayons X 1 et les durées d'échantillonnage te de la colonne de pixel du détecteur de rayons X 2.

Les abscisses 8 représentent le temps et les ordonnées 9 représentent respectivement l'intensité du flux de rayons X continu et celle générée par chaque pixel.

Les m pixels de la colonne de pixels sont synchrones et réalisent l'échantillonnage simultanément. Les n échantillonnages successifs de la colonne sont réalisés pendant la durée du flux continu de rayons X Ti.

Tous les pixels de la colonne de pixels ont la même durée d'échantillonnage te. Ces échantillonnages sont répétés n fois (dans la dimension horizontale).

On obtient m signaux électriques (dans la dimension verticale) à chaque fois que la colonne de m pixels réalise un échantillonnage. Ces m signaux électriques sont associés à une tranche verticale du sujet. On obtient une matrice de n x m pixels, avec n colonnes et m lignes.

La durée de chaque échantillonnage te est inférieure ou égale à la durée de parcours tp d'un point du sujet devant la colonne de pixels. La durée de chaque échantillonnage te est donc inférieure ou égale à 0,7 ms, dans cet exemple.

Les n x m signaux électriques obtenus sont recombinés par les moyens de traitement numérique et de visualisation 3 pour reformer l'image du sujet. Les images obtenues successivement par la colonne de pixels sont juxtaposées les unes aux autres.

Par exemple, pour un pixel de 1 mm de largeur, un sujet de 300 mm de largeur se déplaçant à 5 km/h (durée de parcours tp d'un point du sujet de 0,7 ms devant un pixel), une durée d'échantillonnage te de 0,7 ms (te = tp) conduit à une résolution image de 2 mm. Le sujet passe devant le détecteur de rayons X 2 durant environ 300 ms (Tp). La durée Ti du flux de rayons X continu est d'environ 300 ms (Ti = Tp).

Pour un sujet de 300 mm de largeur, le détecteur de rayons X 2 réalise 150 échantillonnages, conduisant à 150 images colonnes significatives. Dans ces conditions, le nombre total de photoélectrons au niveau du détecteur est de 10⁷.

L'irradiation par tranches du sujet dure environ 300 ms (temps de parcours du sujet complet devant le détecteur). Tout son volume est irradié en 300 ms, mais la dose reçue par une tranche du sujet pendant l'éclairage de la colonne de pixels est de 1/300 (avec un sujet ayant une largeur de 300 mm), soit de 0,7 10⁻⁴ mSv. Après le passage du sujet devant la source de rayons X 1 (dont le flux correspond à une dose de 0.1 mSv pour une durée d'exposition de 1 s), ce dernier reçoit donc une dose totale de 0,7 10⁻⁴mSv.

A titre indicatif on peut choisir un bougé tolérable (flou de l'image) correspondant à un temps de 10% de la durée de parcours tp, soit d'environ 70 µm. Ceci équivaut à une perte de résolution de 0,1 mm. Ce temps correspond au temps minimum d'échantillonnage te pour une colonne de pixels (temps d'ouverture de l'échantillonnage) et conduit à une résolution réelle de 1,1 mm.

Pour une taille de pixel de 100 µm et un temps d'échantillonnage te de 70 µs, la résolution image devient de 200 µm, correspondant à 1500 colonnes significatives. Toutes les combinaisons intermédiaires sont possibles.

Le paramètre important est ici l'échantillonnage du détecteur de rayons X 2. Si la quantité de photons X reçue pendant la durée d'échantillonnage par les pixels est suffisante pour faire une image, la meilleure résolution est obtenue grâce à un échantillonnage court, typiquement de 1 à 100 µs, de préférence de 70 µs.

Pour augmenter la résolution « vraie », la stratégie la plus simple concernant l'échantillonnage consiste à diminuer la taille du pixel. La taille minimale étant à déterminer en fonction du flux de rayons X disponible, de l'opacité du sujet à analyser, et du ratio signal sur bruit (S/B) souhaité.

Le détecteur de rayons X 2 décrit précédemment permet d'atteindre cette performance, car il a un temps de réponse stabilisé bien inférieur à 10 µs, une grande sensibilité et une quasi absence de rémanence, qui est inférieure à 1µs. Le nombre de création de photoélectrons dans ces conditions est de 10⁷ électrons (détecteur à 1 m des moyens de conformation du faisceau), ce qui permet d'obtenir une dynamique dans l'image supérieure à 10³.

Selon un autre mode de réalisation possible de l'invention, la source de rayons X 1 est une source impulsionnelle apte à produire une série d'impulsions de rayons X. La durée de chaque impulsion de rayons X ti est égale ou supérieure à la durée d'échantillonnage te de la colonne de pixels. Chaque impulsion de rayons X est synchronisée avec l'échantillonnage du détecteur de rayons X 2. La durée d'un échantillonnage te est égale ou inférieure à la durée de parcours tp d'un point du sujet devant la colonne de pixels.

Sur l'exemple de la figure 4, la durée de chaque impulsion de rayons X ti est avantageusement sensiblement égale à la durée d'échantillonnage te de la colonne de pixels. Les durées d'impulsion de rayons X ti et d'échantillonnage te sont synchronisées.

La durée d'impulsion de rayons X ti peut également être supérieure ou inférieure à la durée d'échantillonnage te.

Les impulsions de rayons X sont obtenues en modulant le flux de rayons X en impulsions courtes, inférieures à typiquement 100 µs (modulation directe de la source X ou chopper externe).

Pour une colonne de pixels de 1 mm et un sujet de 300 mm, par exemple, la durée totale de passage Tp du sujet devant le détecteur de rayons X 2 est d'environ 300 ms. La série d'impulsions de rayons X et d'acquisitions Ta durent environ 300 ms. La durée ti de chaque impulsion est avantageusement inférieure à la durée de parcours tp d'un point du sujet devant la colonne de pixels, soit inférieure à 0,7 ms.

Quant à la durée te de chaque échantillonnage, elle est avantageusement égale à la durée ti d'une impulsion de rayons X.

L'utilisation d'impulsions de rayons X permet de diminuer la dose reçue par le sujet d'un facteur 10, par exemple, en pulsant le faisceau de rayons X pendant une durée de 70 µs toutes les 0,7 ms. La résolution spatiale reste dans ces conditions de 1 mm. Ainsi, il est possible d'interrompre le flux de rayons X entre deux mesures et donc de réduire la dose globale reçue par le sujet.

Pour retrouver le signal dû à une irradiation de 0,7 ms, il est possible de multiplier par 10 le flux de rayons X. Le sujet reçoit alors une dose de 0,7 10⁻⁴ mSv. Cette opportunité est intéressante si le rapport S/B est trop faible. Néanmoins, on gagne un facteur 10 sur la résolution.

Pour un pixel de 1 mm de largeur et un temps d'échantillonnage te de 70 µs (te = ti), la dose reçue par le sujet est de l'ordre de 0,7.10⁻⁴ mSv (nombre total de photélectrons au niveau du détecteur de 10⁶).

Il est également possible d'augmenter la résolution de l'image en diminuant la taille du pixel (exemple: 100 µm x 100 µm). Avec le flux de rayons X défini plus haut, on perd un facteur 100 sur le nombre d'électrons au niveau du détecteur de rayons X 2 (à moins d'augmenter le flux de rayons X).

Pour une taille de pixel de 100 µm et un temps d'échantillonnage te de 70 µs (te = ti), la résolution image devient de 200 µm, correspondant à 1500 colonnes significatives. Dans ces conditions, la dose reçue par le sujet est de l'ordre de 10⁻⁵ mSv.

Toutes les combinaisons intermédiaires sont possibles.

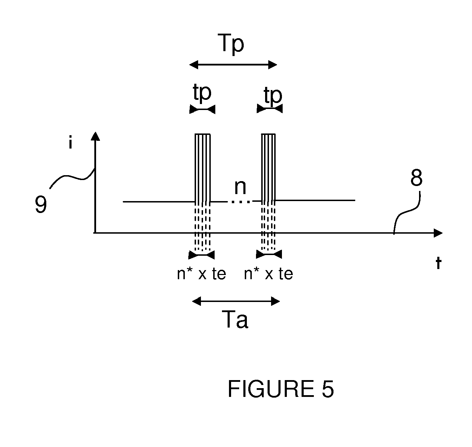

Selon un autre mode de réalisation possible (figure 5), pour augmenter la résolution de l'image, il est possible de multiplier (ou accumuler) les échantillonnages et d'obtenir, pendant la durée de parcours tp d'un point du sujet devant un pixel qui est d'environ 0,7 ms, n* images colonnes supplémentaires. On obtient alors n x n* images colonnes pendant la durée de parcours Tp du sujet devant une colonne de pixel. On obtient alors m x n x n* signaux électriques (m correspondant au nombre de pixels dans une colonne). La durée d'échantillonnage te est strictement inférieure à la durée de parcours tp, et n* est supérieur à 1. La durée ti de l'impulsion de rayons X peut être égale à te ou à tp.

La reconstruction totale de l'image se fait par juxtaposition des signaux ou images colonnes obtenus précédemment. Le nombre de colonnes est lié à la résolution horizontale souhaitée et est déterminé par la taille du pixel et le nombre de séquences d'échantillonnage. La résolution (par interpolation progressive) peut être multipliée par 10 (cas d'un échantillonnage pendant 70 µs).

La sommation de ces images colonnes revient à ouvrir la détection pendant 0,7 ms, et conduit à une amélioration du rapport S/B mais à une résolution deux fois plus faible (doublement de la taille du pixel physique). Toute combinaison intermédiaire est possible pour améliorer le rapport signal sur bruit et améliorer la résolution physique jusqu'à un millimètre (+ 0,1 mm).

Par exemple, pour une durée d'échantillonnage te de 100 µs, le nombre de colonne est multiplié par 7, augmentant la résolution d'un facteur 7.

Par exemple, si tp = 700 µs, et en prenant te = 70 µs, on accumule et acquière 10 fois le signal pendant 70 µs, sur une colonne de pixels de 1 mm de large (pixel de 1 mm x 1 mm).

On obtient 10 images colonnes décalées de 0,1 mm. On perd à ce niveau un facteur 10 sur le nombre d'électrons dans chaque image. La sommation de ces images redonne l'image donnée par un pixel de 1 mm² pendant 0,7 ms. Si le signal est suffisant, on atteint par ce procédé une « résolution » spatiale de 0,1 mm.

La soustraction entre deux images colonnes successives (prises en 70 µs) donne le Delta image lié à 70 µs de progression du sujet, d'où l'augmentation de résolution d'un facteur 10.

Le Delta image obtenu correspond à un pixel de 0,1 mm. Potentiellement, ceci correspond à une résolution physique de 0,1 mm (si le signal est exploitable).

Selon un autre mode de réalisation possible (non représenté) le détecteur de rayons X 2 comprend une colonne de pixels 10 dédiée à la détection des rayons X directement transmis par le sujet (ou non absorbés), et au moins une autre colonne de pixels 11 dédiée à la détection des rayons X diffusés par le sujet.

Lors de chaque échantillonnage, un signal associé à un flux de rayons X transmis par de sujet est mesuré et un signal associé à un flux de rayons X diffusé par de sujet est mesuré. Ces signaux sont ensuite soustraits pour corriger la mesure de flux direct du fond diffusé.

Les moyens de traitement numériques du dispositif de détection par imagerie X peuvent comprendre des moyens pour améliorer le contraste de l'image. Ces moyens permettent de mettre en valeur sur une image, les objets portés par le sujet par rapport aux tissus du sujet.

Ainsi, l'invention fournit un système et un procédé de détection par imagerie X d'objets sur un sujet en mouvement destinés à la sécurité permettant de réaliser des images de très bonne qualité et en un temps très court. La dose d'irradiation reçue par le sujet est donc très faible (< 10⁻³ mSv).

Un tel dispositif de détection peut être également utilisé pour la détection des bagages dans les aéroports et permet de diminuer la durée d'inspection des bagages.

## Revendications

1. Dispositif de détection par imagerie X d'objets sur un sujet en mouvement par rapport audit dispositif de détection selon une direction d'avancement (Y), ledit dispositif comprenant :
- une source de rayons X (1) fixe, et apte à émettre un flux de rayons X afin d'irradier ledit sujet, lesdits photons générés ayant une énergie comprise entre 10 keV et 120 keV,
- un détecteur de rayons X (2) fixe comprenant au moins une colonne formée de m pixels apte à produire simultanément m signaux électriques pour former une image colonne, m étant supérieur ou égal à 1, ledit sujet parcourant une colonne de pixels pendant une durée de parcours Tp, et un point dudit sujet parcourant ladite colonne de pixels pendant une durée tp,
- des moyens de commande et de synchronisation (4) de ladite source de rayons X (1) et dudit détecteur de rayons X (2), et
- des moyens de traitement numérique et de visualisation (3) desdits signaux électriques aptes à reproduire une image du sujet,
**caractérisé en ce que** :
- des moyens de conformation du faisceau (6) sont disposés devant ladite source de rayons X (1), lesdits moyens de conformation du faisceau (6) étant aptes à conformer le rayonnement X émis par la source de rayons X (1) pour produire un faisceau de rayons X rideau (7) ayant une largeur L proche de celle d'une colonne de pixels du détecteur de rayons X (2), et dirigé sur ladite colonne de pixels,
- ledit détecteur de rayons X (2) est un détecteur sensible et rapide ayant un temps de réponse inférieur à 10 µs, ledit détecteur de rayons X (2) et les moyens de commande et de synchronisation (4) étant aptes à réaliser une série de n échantillonnages, ayant chacun une durée te, lors du passage du sujet devant la colonne de pixels dudit détecteur de rayons X (2) pendant la durée Tp, générant n images colonnes, la durée d'échantillonnage te étant inférieure ou égale à la durée de parcours tp d'un point dudit sujet devant une colonne de pixels.

2. Dispositif de détection selon la revendication 1, **caractérisé en ce qu'**il comprend des moyens de déclenchement et d'arrêt automatiques de la source de rayons X (1) et du détecteur de rayons X (2), lesdits moyens de déclenchement et d'arrêt automatiques étant des moyens de déclenchement et d'arrêt optiques aptes à permettre le déclenchement et l'arrêt de la source de rayons X (1) et du détecteur de rayons X (2) lors du passage du sujet entre les supports latéraux (5a, 5b).

3. Dispositif de détection selon l'une quelconque des revendications 1 ou 2, **caractérisé en ce que** ladite source de rayons X (1) est une source à flux continu apte à délivrer un flux de rayons X continu pendant une durée Ti, la durée Ti étant supérieure ou égale à la durée de parcours Tp dudit sujet devant une colonne de pixels.

4. Dispositif de détection selon l'une quelconque des revendications 1 ou 2, **caractérisé en ce que** ladite source de rayons X (1) est une source impulsionnelle apte à produire une série d'impulsions de rayons X, ayant chacune une durée ti, lors du passage du sujet devant le détecteur de rayons X (2), la durée de chaque impulsion de rayons X ti étant supérieure ou égale à la durée d'échantillonnage te.

5. Dispositif de détection selon l'une quelconque des revendications 1 à 4, **caractérisé en ce que** le détecteur de rayons X (2) comprend une colonne de pixels dédiée à la détection des rayons X non absorbés par le sujet (10), et au moins une autre colonne de pixels dédiée à la détection des rayons X diffusés par le sujet (11).

6. Procédé de détection par imagerie X d'objets sur un sujet en mouvement, selon une direction d'avancement (Y), par un dispositif de détection par imagerie X, selon l'une quelconque des revendications 1 à 5, ledit procédé de détection comprenant les étapes consistant à :
- émettre au moins un flux de rayons X afin d'irradier ledit sujet, lesdits photons générés ayant une énergie comprise entre 10 keV et 120 keV,
- détecter les radiations issues de l'interaction du flux de rayons X avec le sujet au moyen d'un détecteur de rayons X (2) comprenant au moins une colonne formée de m pixels produisant simultanément m signaux électriques pour former une image colonne, m étant supérieur ou égal à 1,
- traiter numériquement lesdits signaux électriques et visualiser l'image reproduite du sujet,
**caractérisé en ce que** :
- le rayonnement X émis est conformé en un faisceau de rayons X rideau (7) ayant une largeur L proche de celle d'une colonne de pixels du détecteur de rayons X (2), ledit faisceau de rayons X rideau (7) étant dirigé sur ladite colonne de pixels,
- le temps de réponse du détecteur de rayons X (2) est inférieur à 10 µs,
- un point dudit sujet parcourant une colonne de pixels du détecteur de rayons X (2) pendant une durée tp, ledit détecteur de rayons X (2) réalise une série de n échantillonnages, ayant chacun une durée te, lors du passage du sujet devant la colonne de pixels dudit détecteur de rayons X (2) pendant la durée Tp, générant n images colonnes, la durée d'échantillonnage te étant inférieure ou égale à la durée de parcours tp d'un point dudit sujet devant une colonne de pixels.

7. Procédé de détection par imagerie X selon la revendication 6, **caractérisé en ce que** l'émission du flux de rayons X et la série d'échantillonnages sont déclenchées automatiquement et synchronisées.

8. Procédé de détection par imagerie X selon l'une quelconque des revendications 6 ou 7, **caractérisé en ce que** le flux de rayons X se présente sous la forme d'une impulsion de rayons X de durée ti, n impulsions de durée ti étant émises lors du passage du sujet devant le détecteur de rayons X (2), chaque impulsion étant synchronisée avec l'échantillonnage pour obtenir l'image d'une tranche du sujet, les n images obtenues étant recombinées pour reformer l'image du sujet, chaque échantillonnage ayant une durée te inférieure ou égale à la durée de l'impulsion de rayons X ti.

9. Procédé de détection par imagerie X selon l'une quelconque des revendications 6 à 8, **caractérisé en ce que** n* échantillonnages supplémentaires sont réalisés pendant chaque durée de parcours tp d'un point dudit sujet devant une colonne de pixels, générant n x n* images colonnes pendant la durée de parcours Tp dudit sujet devant la colonne de pixels, la durée d'échantillonnage te étant strictement inférieure à la durée de parcours tp, et n* étant supérieur à 1.

10. Procédé de détection par imagerie X selon l'une quelconque des revendications 6 à 9, **caractérisé en ce que**, lors de chaque échantillonnage, un signal associé à un flux de rayons X non absorbé par de sujet est mesuré et un signal associé à un flux de rayons X diffusé par de sujet est mesuré, lesdits signaux étant mesurés simultanément et soustraits.
